# EUROPEAN PATENT APPLICATION

(11) **EP 4 425 976 A1**
(43) Date of publication of application: **04.09.2024**
(21) Application number: 22904720.4
(22) Date of filing: 09.12.2022
(51) Int. Cl.: H04W 8/24, H04W 72/04, H04W 80/02

(54) **METHOD AND APPARATUS FOR REPORTING UE CAPABILITY IN NEXT GENERATION WIRELESS COMMUNICATION SYSTEM**

(30) Priority: 09.12.2021 KR 20210175830
(71) Applicant: Samsung Electronics Co., Ltd., Suwon-si, Gyeonggi-do 16677 (KR)
(72) Inventor: LEE, Taeseop, Suwon-si, Gyeonggi-do 16677 (KR); JANG, Jaehyuk, Suwon-si, Gyeonggi-do 16677 (KR); AGIWAL, Anil, Suwon-si, Gyeonggi-do 16677 (KR)
(74) Representative: Gulde & Partner
(86) International application number: PCT/KR2022/020053
(87) International publication number: WO 2023/106891

(57) **Abstract**

The present disclosure relates to a 5G or 6G communication system for supporting higher data transmission rates. The present invention relates to a method by which a UE reports a new UE capability parameter to a base station in order for the UE to reduce a layer 2 (L2) buffer size required for preventing packet loss due to buffer overflow.

## Description

### [Technical Field]

The disclosure relates to a method and an apparatus for reporting UE capability in a next generation wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (Bandwidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACK for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with extended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

The need for a method to reduce a total L2 buffer size required for a terminal has emerged.

### [Disclosure of Invention]

### [Technical Problem]

The disclosure proposes a new UE capability parameter in order to reduce a total L2 buffer size required for a terminal.

### [Solution to Problem]

According to an embodiment of the disclosure to solve the above problem, a terminal method may include receiving, from a base station, a UE capability request message for requesting capability information of a terminal, and transmitting, to the base station, a UE capability information message including information on whether the terminal supports mapping of at least one carrier having different subcarrier spacings to a logical channel.

According to another embodiment of the disclosure, a base station method may include transmitting, to a terminal, a UE capability request message for requesting capability information of the terminal, receiving a UE capability information message including information on whether the terminal supports mapping of at least one carrier having different subcarrier spacings to a logical channel, and configuring a logical channel for the terminal, based on the received UE capability information message.

According to another embodiment of the disclosure, a terminal may include a transceiver, and a controller configured to receive, from a base station via the transceiver, a UE capability request message for requesting capability information of a terminal, and transmit, to the base station via the transceiver, a UE capability information message including information on whether the terminal supports mapping of at least one carrier having different subcarrier spacings to a logical channel.

According to another embodiment of the disclosure, a base station may include a transceiver, and a controller configured to perform control to transmit, to a terminal via the transceiver, a UE capability request message for requesting capability information of the terminal, receive, via the transceiver, a UE capability information message including information on whether the terminal supports mapping of at least one carrier having different subcarrier spacings to a logical channel, and configure a logical channel for the terminal, based on the received UE capability information message.

### [Advantageous Effects of Invention]

According to an embodiment of the disclosure, a terminal reports a new UE capability parameter to a base station, and can reduce a layer 2 (L2) buffer size required for the terminal to prevent a packet loss due to a buffer overflow.

### [Brief Description of Drawings]

FIG. 1 is a diagram illustrating a structure of an NR system according to an embodiment of the disclosure;
FIG. 2 is a diagram illustrating a radio protocol structure in LTE and NR systems according to an embodiment of the disclosure;
FIG. 3 is a diagram illustrating a procedure of requesting and reporting UE capability information between a terminal and a base station according to an embodiment of the disclosure;
FIG. 4 is a flowchart illustrating a terminal operation method for UE capability reporting when a base station requests, via UECapabilityEnquiry, information that a radio access technology (RAT) type is new radio (NR), according to an embodiment of the disclosure;
FIG. 5 is a diagram illustrating an example of calculating a total layer 2 (L2) buffer size for a specific band combination supported by a terminal and a feature set combination applied thereto, according to an embodiment of the disclosure;
FIG. 6 is a diagram illustrating an example in which, when concurrent mapping of a logical channel to carriers using asymmetric subcarrier spacings (SCSs) is restricted, a required total layer 2 (L2) buffer size is decreased, according to an embodiment of the disclosure;
FIG. 7 is a diagram illustrating an example of signaling operations between a terminal and a base station when a new UE capability parameter that restricts logical channel mapping is introduced, according to an embodiment of the disclosure;
FIG. 8 shows diagrams illustrating examples of UE capability parameters defined to inform a base station that there is a restriction on a terminal with respect to concurrent mapping of a logical channel to carriers using asymmetric subcarrier spacings (SCSs), according to an embodiment of the disclosure;
FIG. 9 is a flowchart illustrating a terminal operation method for configuring and reporting a new UE capability parameter value that restricts logical channel mapping, according to an embodiment of the disclosure;
FIG. 10 is a flowchart illustrating an operation method of, when a base station receives a new UE capability parameter that restricts logical channel mapping, configuring, based thereon, a logical channel for a terminal according to an embodiment of the disclosure;
FIG. 11 shows diagrams illustrating examples of calculating a total layer 2 (L2) buffer size when a new UE capability parameter that restricts logical channel mapping is given, according to an embodiment of the disclosure;
FIG. 12 is a diagram illustrating a terminal device according to an embodiment of the disclosure; and
FIG. 13 is a diagram illustrating a base station device according to an embodiment of the disclosure.

### [Mode for the Invention]

Hereinafter, embodiments of the disclosure will be described in detail with reference to the accompanying drawings. In the following description of the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in the embodiments of the disclosure, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" or may be implemented to reproduce one or more CPUs within a device or a security multimedia card. Furthermore, the "unit" in the embodiments may include one or more processors.

In the following description of the disclosure, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as used below, and other terms referring to subjects having equivalent technical meanings may be used.

In the following description, the terms "physical channel" and "signal" may be interchangeably used with the term "data" or "control signal". For example, a physical downlink shared channel (PDSCH) is a term referring to a physical channel over which data is transmitted, but the PDSCH may be used to refer to data. That is, in the disclosure, the expression "transmit a physical channel" may be construed as having the same meaning as "transmit data or a signal over a physical channel".

In the following description of the disclosure, higher signaling may mean a signal transmission method in which a base station transmits a signal to an electronic device by using a downlink data channel in a physical layer or an electronic device transmits a signal to a base station by using an uplink data channel in a physical layer. The higher signaling may be understood as radio resource control (RRC) signaling or a media access control (MAC) control element (CE).

In the following description of the disclosure, terms and names defined in the 3rd generation partnership project new radio (3GPP NR) or the 3rd generation partnership project long term evolution (3GPP LTE) standards will be used for the sake of descriptive convenience. However, the disclosure is not limited by these terms and names, and may be applied in the same way to systems that conform other standards. In the disclosure, the term "eNB" may be interchangeably used with the term "gNB" for the sake of descriptive convenience. That is, a base station described as "eNB" may indicate "gNB". Furthermore, the term "terminal" may refer to not only mobile phones, MTC devices, NB-IoT devices, and sensors, but also other wireless communication devices.

In the following description, a base station is an entity that allocates resources to terminals, and may be at least one of a gNode B (gNB), an eNode B (eNB), a Node B, a base station (BS), a wireless access unit, a base station controller, and a node on a network. A terminal may include a user equipment (UE), a mobile station (MS), a cellular phone, a smartphone, a computer, or a multimedia system capable of performing communication functions. Of course, examples of the base station and the terminal are not limited thereto.

The disclosure relates to a method and a device for reporting UE capability in a wireless communication system. More specifically, the disclosure relates to a method and a device for, in 3GPP 5G new radio (NR), reporting a capability related to a terminal mapping a logical channel to carriers (e.g., multiple carriers having different SCS values) having asymmetric subcarrier spacings (SCSs).

The disclosure provides descriptions of a method in which, in a wireless communication system, a terminal with a restriction on memory use reports a UE capability parameter related to mapping of a logical channel to carriers having asymmetric subcarrier spacings (SCSs), thereby enabling reduction of a required L2 buffer size.

Via the disclosure, a terminal with a restriction on memory use may report a UE capability parameter related to mapping of a logical channel to carriers having asymmetric subcarrier spacings (SCSs). A base station may configure a logical channel in consideration of a capability of the terminal, based on the reported UE capability parameter. Via the logical channel configuration in consideration of the capability of the terminal, a layer 2 (L2) buffer size that the terminal needs to prepare to prevent a packet loss due to a buffer overflow may become smaller.

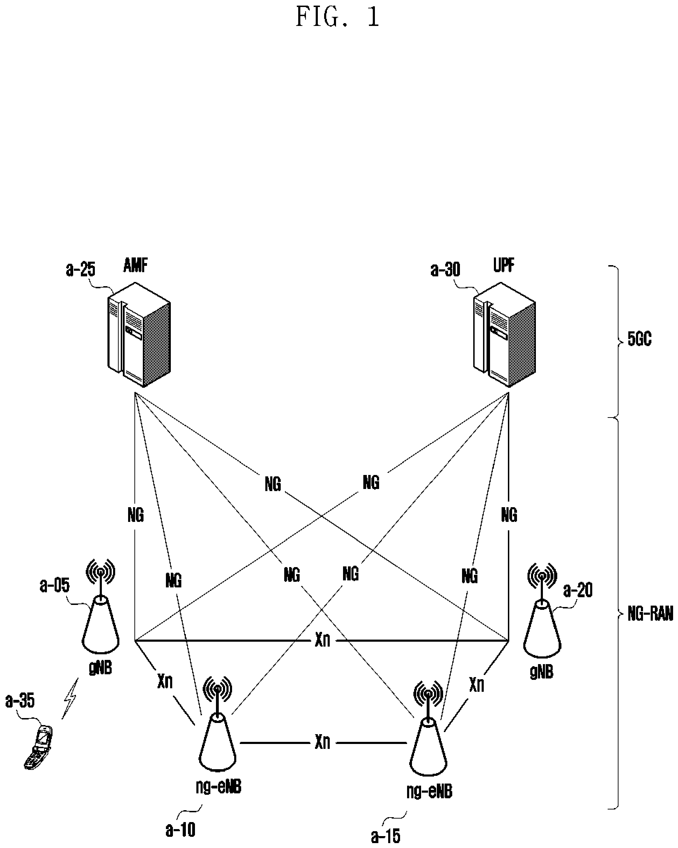

FIG. 1 is a diagram illustrating a structure of an NR system according to an embodiment of the disclosure.

Referring to FIG. 1, a wireless communication system may include multiple base stations (e.g., gNB a-05, ng-eNB a-10, ng-eNB a-15, and gNB a-20), an access and mobility management function (AMF) a-25, and a user plane function (UPF) a-30. A user equipment (hereinafter, UE or terminal) a-35 may access an external network via the base stations (e.g., gNB a-05, ng-eNB a-10, ng-eNB a-15, and gNB a-20) and the UPF a-30.

In FIG. 1, the base stations (e.g., gNB a-05, ng-eNB a-10, ng-eNB a-15, and gNB a-20) are access nodes of a cellular network and may provide radio access to terminals accessing the network. For example, in order to service traffic of users, the base stations (e.g., gNB a-05, ng-eNB a-10, ng-eNB a-15, and gNB a-20) may collect state information, such as buffer states, available transmission power states, and channel states, of terminals and perform scheduling to support connections between the terminals and a core network (CN, in particular, CN of NR is referred to as 5GC). In communication, a user plane (UP) related to transmission of actual user data and a control plane (CP), such as connection management, may be separately configured. In the drawing, the gNB a-05 and the gNB a-20 may use UP and CP technology defined in NR technology, and although the ng-eNB a-10 and the ng-eNB a-15 are connected to a 5GC, the ng-eNBs may use UP and CP technology defined in LTE technology.

The AMF a-25 is a device responsible for various control functions as well as a mobility management function for a terminal, and is connected to multiple base stations, and the UPF a-30 may be a kind of gateway device that provides data transmission. Although not illustrated in FIG. 1, the NR wireless communication system may include a session management function (SMF). The SMF may manage a packet data network connection, such as a protocol data unit (PDU) session provided to a terminal.

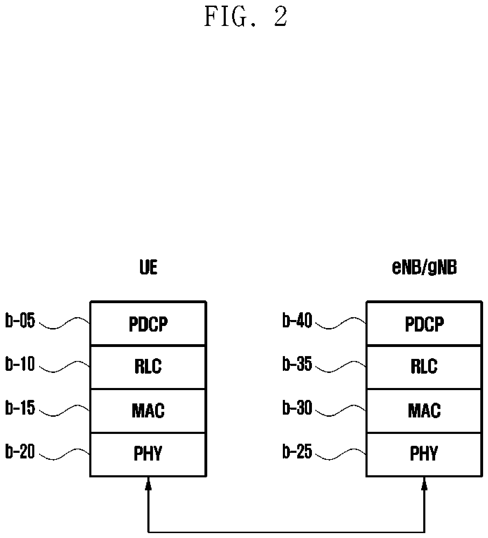

FIG. 2 is a diagram illustrating a radio protocol structure in LTE and/or NR systems according to an embodiment of the disclosure.

Referring to FIG. 2, radio protocols of the LTE system may include packet data convergence protocols (PDCPs) b-05 and b-40, radio link controls (RLCs) b-10 and b-35, and medium access controls (MAC) b-15 and b-30 in a terminal and an eNB, respectively. The packet data convergence protocols (PDCPs) b-05 and b-40 are responsible for an operation, such as IP header compression/reconstruction, and the radio link controls (hereinafter, referred to as RLCs) b-10 and b-35 reconfigure a PDCP protocol data unit (PDU) to be an appropriate size. The MACs b-15 and b-30 are connected to multiple RLC layer devices included in one terminal, and multiplex RLC PDUs to a MAC PDU and demultiplex RLC PDUs from a MAC PDU. Physical (PHY) layers b-20 and b-25 perform channel coding and modulation on higher-layer data, make the data into OFDM symbols, and transmit the same via a wireless channel, or perform demodulation and channel decoding on OFDM symbols received via a wireless channel and transfer the same to a higher layer. In addition, the physical layers also use hybrid ARQ (HARQ) for additional error correction, and a reception end transmits, using 1 bit, information on whether a packet transmitted by a transmission end is received. The 1-bit information is referred to as HARQ ACK/NACK information. In LTE, downlink HARQ ACK/NACK information for uplink data transmission is transmitted via a physical hybrid-ARQ indicator channel (PHICH) that is a physical channel, and in NR, whether retransmission is necessary or whether to perform new transmission may be determined via scheduling information of a corresponding terminal in a physical dedicated control channel (PDCCH) that is a channel via which downlink/uplink resource allocation, etc. are transmitted. This is because asynchronous HARQ is applied in NR. Uplink HARQ ACK/NACK information for downlink data transmission may be transmitted via a physical channel, such as a physical uplink control channel (PUCCH) or a physical uplink shared channel (PUSCH). The PUCCH is generally transmitted in an uplink of a PCell, which will be described later. However, when supported by a terminal, a base station may additionally transmit the PUCCH to a terminal in an SCell, which will be described later, and the SCell in this case is referred to as a PUCCH SCell.

Although not illustrated in the drawing, radio resource control (RRC) layers are present above the PDCP layers of the terminal and the base station, respectively, and access and measurement-related configuration control messages for radio resource control may be exchanged in the RRC layers.

The PHY layer may include one or multiple frequencies/carriers, and a technology of concurrently configuring and using multiple frequencies is referred to as a carrier aggregation technology (hereinafter, referred to as CA). In the CA technology, instead of using only one carrier for communication between a terminal (or user equipment (UE)) and a base station (E-UTRAN nodeB (eNB)), one main carrier and one or multiple sub-carriers are additionally used so that the amount of transmission may be dramatically increased by the number of sub-carriers. In LTE, a cell in a base station, which uses a main carrier, is referred to as a main cell or a primary cell (PCell), and a cell in a base station, which uses a sub-carrier, is referred to as a sub-cell or a secondary cell (SCell).

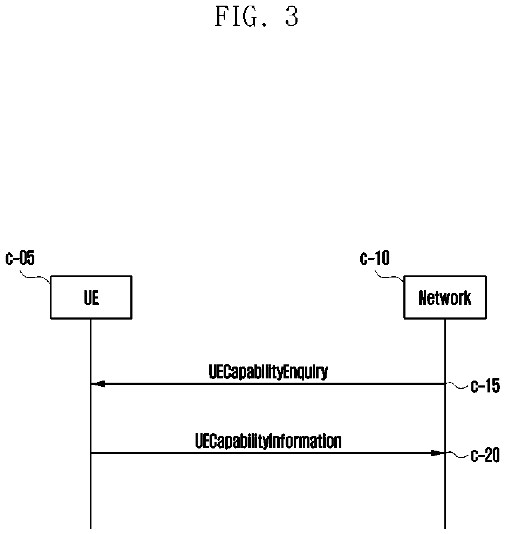

FIG. 3 is a diagram illustrating a procedure of requesting and reporting UE capability information between a terminal and a base station according to an embodiment of the disclosure.

Referring to FIG. 3, a terminal c-05 may perform a procedure of, while being connected to a network (or serving base station c-10) (hereinafter, base station c-10), reporting a capability supported by the terminal to the base station c-10.

In operation c-15, the base station c-10 may transfer, to the connected terminal c-05, a UE capability request (UECapabilityEnquiry) message for requesting to report a capability. According to the embodiment, the base station c-10 may include a UE capability request for each RAT type in the UECapabilityEnquiry message. The request for each RAT type may include requested frequency band information. In addition, for the UECapabilityEnquiry message, multiple RAT types may be requested in one RRC message container. Alternatively, the base station c-10 may have and transfer the UECapabilityEnquiry message including the request for each RAT type multiple times to the terminal c-05. For example, the UECapabilityEnquiry message in operation c-15 may be transmitted once or repeated multiple times.

In operation c-20, the terminal c-05 may configure a UE capability information (UECapabilityInformation) message corresponding to the UECapabilityEnquiry message, match a response to the request, and report the response to the base station c-10. In the next-generation mobile communication system, a UE capability for MR-DC, including NR, LTE, and EN-DC, may be requested. According to the embodiment, the UE capability request (UECapabilityEnquiry) message may be initially transmitted after the terminal c-05 is connected and the base station c-10 identifies the connection. However, the base station c-10 may request a UE capability from the terminal c-05 under any conditions when necessary.

In addition, when the base station c-10 requests the terminal c-05 to generate the UECapabilityInformation message in operation c-15, filtering information capable of indicating conditions and restrictions may be included. For example, even if the capability of the terminal c-05 is great, if the base station c-10 is unable to process and support the capability, it may be meaningless to receive a report of the capability of the terminal c-05. Therefore, the base station c-10 may restrict the UE capability reported by the terminal c-05 in order to receive only UE capability information necessary for the base station c-10. In this way, the size of the UECapabilityInformation message reported by the terminal c-05 may be reduced by the base station c-10 restricting the UE capability reported by the terminal c-05.

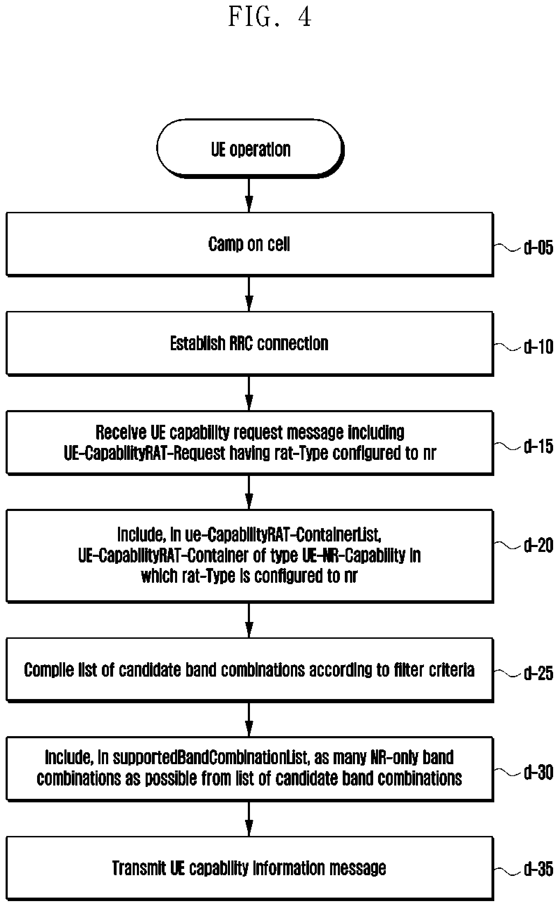

FIG. 4 is a diagram illustrating a terminal operation method for UE capability reporting when a base station requests, via UECapabilityEnquiry, information that a RAT type is new radio (NR), according to an embodiment of the disclosure.

Referring to FIG. 4,
- In operation d-05, a terminal may camp on a base station. For example, the terminal may camp on a cell.
- In operation d-10, the terminal that has completed camp-on may establish an RRC connection to a network (establish RRC connection). When radio-access capability information of the terminal in an RRC connected mode (RRC_Connected mode) is required, the network may transmit a UECapabilityEnquiry message to the terminal. The base station may request multiple RAT types in one UECapabilityEnquiry message. However, according to an embodiment, FIG. 4 only illustrates an embodiment in which an RAT type is NR. If RAT types other than NR are requested together, requested information may be included together in UECapabilityInformation in the form of a message containing UE capability information defined in the standard corresponding to each RAT type.
- In operation d-15, the terminal may receive a UECapabilityEnquiry message including UE-CapabilityRAT-Request with an RAT type of NR.
- In operation d-20, the terminal may include UE-NR-Capability as an entry in ue-CapabilityRAT-ContainerList included in a UECapabilityInformation message, wherein an RAT type in this case may be configured to be NR. Then, the terminal may perform a procedure of including and configuring information on supportedBandCombinationList, featureSets, and featureSetCombinations in the UECapabilityInformation message. However, in FIG. 4, only a supportedBandCombinationList configuration procedure is illustrated. supportedBandCombinationList is a list including supported band combinations. Each entry includes parameters for one band combination. If capabilityRequestFilterCommon that is filtering information is included, the terminal may compile a list of candidate band combinations according to filtering criteria included in the capabilityRequestFilterCommon field. A band used in this case is a band included in frequencyBandListFilter, and priority may be determined according to an order of frequencyBandListFilter. In addition, when parameter values of each band within each band combination (BC) are configured, if maxBandwidthRequestedDL, maxBandwidthRequestedUL, maxCarriersRequestedDL, maxCarriersRequestedUL, ca-BandwidthClassDL-EUTRA or ca-BandwidthClassUL-EUTRA is received, each parameter value cannot exceed the received value.
- In operation d-30, the terminal may select as many NR-only band combinations as possible from the list of candidate band combinations and include the same in supportedBandCombinationList.
- In operation d-35, the terminal may transmit, to the base station, a completed UECapabilityInformation message including featureSetCombinations and featureSets.

Table 1 below describes a scheme of calculating a total layer 2 buffer size required for the terminal in 5G NR defined in specification TS 38.305.

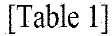

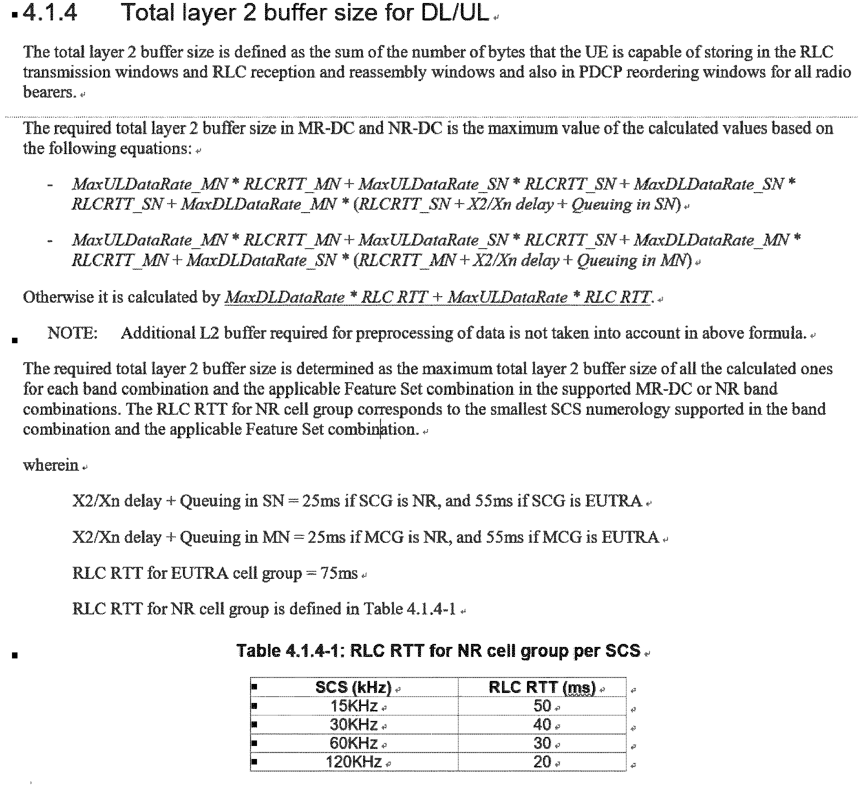

Referring to Table 1, the total layer 2 buffer size required for the terminal may be defined as a total number of bytes required to store all of RLC transmission windows, RLC reception windows, RLC reassembly windows, and PDCP reordering windows for all radio bearers. The calculation equations for the total layer 2 buffer size required according to the above definition may be divided into MR-DC and NR-DC cases and other cases. In the disclosure, for convenience of description, main embodiments of the disclosure are described focusing on the underlined calculation equation (case other than MR-DC and NR-DC) in <Table 1>, but all contents described below may also be applied in the same way to MR-DC and NR-DC cases.

As described in FIG. 4, the total layer 2 buffer size required for the terminal may be determined to be a maximum value among layer 2 buffer size values calculated for multiple band combinations in UECapability information reported to the base station by the terminal, and corresponding feature set combinations, respectively.

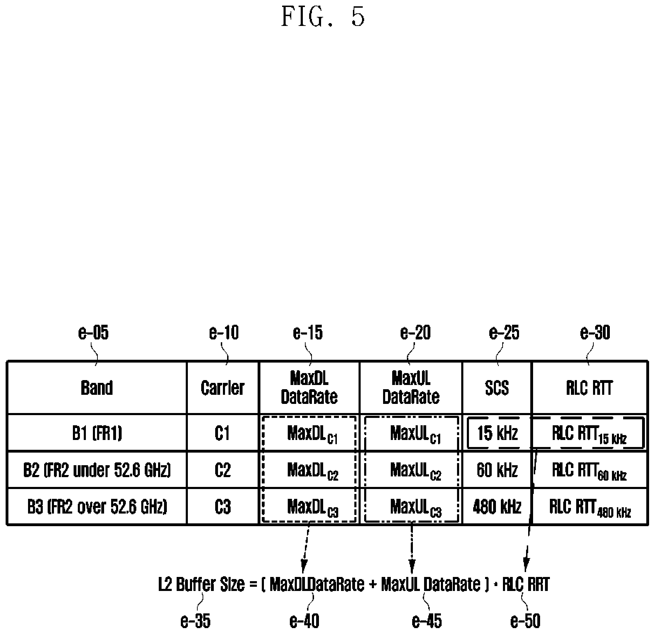

According to the total layer 2 buffer equation underlined in Table 1, the layer 2 buffer size may be calculated by adding a value obtained by multiplying a maximum UL data rate and RLC RTT to a value obtained by multiplying a maximum DL date rate and RLC RTT. In this case, the RLC round trip time (RTT) value used in the calculation equation may refer to a value corresponding to a smallest subcarrier spacing (SCS) in a corresponding band combination and a feature set combination corresponding to the band communication. For example, if the smallest SCS value is 30 KHz, 40 ms which is an RLC RTT value corresponding to 30 kHz may be used in the total layer 2 buffer size calculation equation. FIG. 5 is a diagram illustrating an example of calculating a total layer 2 buffer size for a specific band combination supported by a terminal and a feature set combination applied thereto, according to an embodiment of the disclosure.

Referring to FIG. 5, band combinations and carriers e-10 included in feature set combinations corresponding to the band combinations are given as an example, wherein there are three carriers of C1, C2, and C3 which may be operated in bands e-05 B1, B2, and B3, respectively. In this case, MaxDLDataRate e-40 in an equation for determining an L2 buffer size e-35 may refer to the sum of MaxDLDataRate e-15 of each carrier, and MaxULDataRate e-45 may refer to the sum of MaxULDataRate e-20 of each carrier. In addition, lastly, an RLC RTT e-50 may be an RLC RTT value corresponding to 15 kHz which is a smallest value among SCS e-25 values of carriers C1, C2, and C3.

In 3GPP Rel-17, a specification is defined for expanding an operating range of NR from 52.6 GHz to 71 GHz, and a corresponding work item (WI) is defined as shown in Table 2 below.

**[Table 2]**

| |
|---|
| **From WID RP-210862** |
| In addition to 120kHz SCS, specify new SCS, 480kHz and 960kHz, and define maximum bandwidth(s), for operation in this frequency range for data and control channels and reference signals, only NCP supported. |

Referring to Table 2, in order to expand the operating range of NR to 52.6 GHz or higher, it is proposed to introduce new SCS values of 480 kHz and 960 kHz and newly define a maximum bandwidth. In addition, an agreement has been reached on, while using newly introduced 480 kHz and 960 kHz SCSs in RANI, using up to 275 physical resource blocks (PRBs) as before. This indicates that, even if the maximum number of PRBs available as before remains the same at 275, a symbol duration may be shortened due to a greater SCS value, so that a higher data rate may be provided. (For example, 960 kHz has a symbol duration that is 64 times shorter than that of 15 kHz, and may provide a data rate of up to 64 times higher or more.) This indicates that the MaxDLDataRate and MaxULDataRate values in the total L2 buffer size calculation equation described above may become very large. After all, accordingly, the total L2 buffer size required for the terminal may become much larger than before.

In the total L2 buffer size calculation equation, the RLC RTT value may become smaller in the newly introduced SCSs of 480 kHz and 960 kHz. Accordingly, the RLC RTT value may offset the increase in the data rates. However, since the RLC RTT value cannot be decreased exponentially compared to the data rates which increase exponentially as actual SCS values increase, the required total L2 buffer size may eventually become much larger than before. In addition, as in the example of FIG. 5, the RLC RTT value, which corresponds to a smallest SCS among SCSs of a corresponding band combination and carriers included in a feature set combination, is used in the L2 buffer size calculation equation. Therefore, in some cases, while the RLC RTT remains the same, MaxDataRate may increase exponentially, and eventually, the L2 buffer size may also increase exponentially.

When the total layer 2 (L2) buffer size required for the terminal increases, manufacturing costs of the terminal may increase as the size of memory that the terminal needs to prepare for the layer 2 buffer size increases. In addition, in some cases, for a terminal having a restricted capability, a band combination which includes a carrier operating with an SCS of 120 kHz or higher at 52.6 GHz or higher may not be supported due to lack of memory.

Therefore, in the disclosure, in order to reduce the required total layer 2 (L2) buffer size according to the UE capability, a UE capability parameter enabling to request restriction on concurrent mapping of a logical channel to carriers having asymmetric subcarrier spacings (SCSs) is newly defined. When the terminal reports the newly defined UE capability parameter to the base station, the base station may determine, based on the reported UE capability parameter, a subcarrier spacing (SCS) combination supportable by the terminal when mapping an actual logical channel. In addition, the base station may perform a logical channel configuration operation based on the supportable SCS combination.

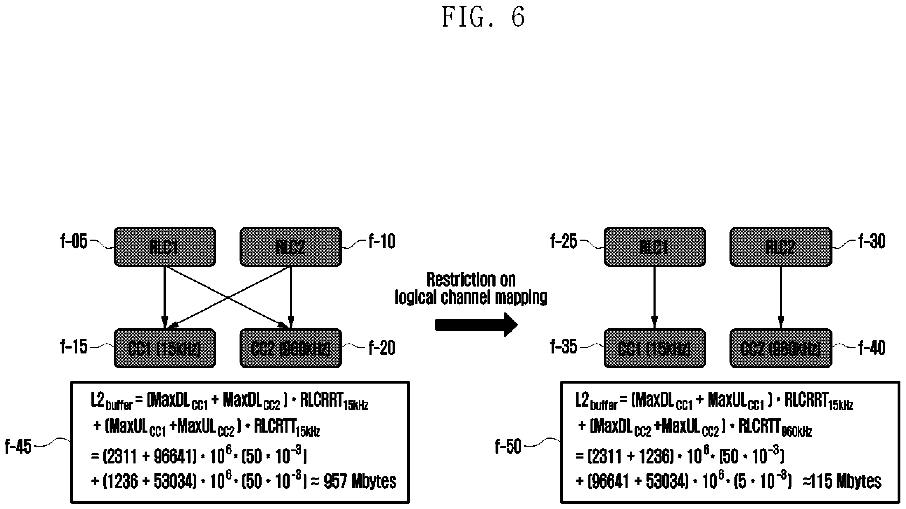

FIG. 6 is a diagram illustrating an example of a decrease in a total layer 2 (L2) buffer size required when concurrent mapping of a logical channel to carriers using asymmetric subcarrier spacings (SCSs) is restricted, according to an embodiment of the disclosure.

Referring to FIG. 6, an example of a decrease in a total layer 2 (L2) buffer size required when concurrent mapping of a logical channel to carriers having asymmetric subcarrier spacings (SCSs) is restricted may be identified. When there is no restriction on logical channel mapping as before, a logical channel corresponding to RLC entity1 f-05 may be concurrently mapped to component carrier (CC)1 f-15 having an SCS of 15 kHz and CC2 f-20 having an SCS of 960 kHz. In this case, according to the layer 2 (L2) buffer size calculation method described above in FIG. 5, a layer 2 buffer size required for this carrier combination is calculated to be approximately 957 Mbytes f-45. On the other hand, when there is a restriction on concurrently mapping a logical channel to carriers having asymmetric subcarrier spacings (SCSs), logical channels corresponding to RLC entity1 f-25 and RLC entity2 f-30 may be separately mapped to a component carrier (CC)1 f-35 having a subcarrier spacing (SCS) of 15 kHz and CC2 f-40 having an SCS of 960 kHz, respectively. In this case, according to the layer 2 (L2) buffer size calculation method described above in FIG. 5, a layer 2 (L2) buffer size required for the carrier combination is calculated to be approximately 115 Mbytes f-50. In the example above, when there is a restriction on concurrently mapping a logical channel to carriers having asymmetric subcarrier spacings (SCSs), it may be identified that the total required layer 2 (L2) buffer size is reduced by approximately 88%. The detailed calculation equations for the maximum uplink/downlink data transmission rate for each carrier used when calculating the layer 2 (L2) buffer size in FIG. 6 are as shown in Table 3 below. (According to an embodiment, for the data rate calculation equations below, reference has been made to 3GPP specification TS 38.306.)

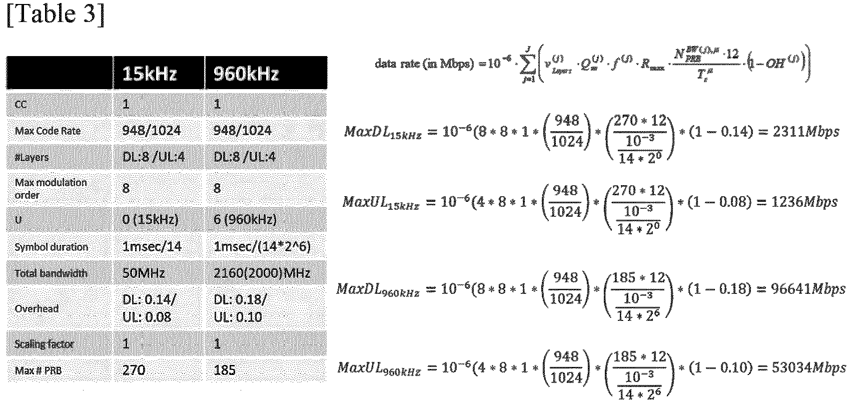

Therefore, in order to restrict concurrent mapping of a logical channel to carriers using asymmetric subcarrier spacings (SCSs) so as to reduce the total layer 2 (L2) buffer size required for the terminal, the disclosure proposes various embodiments which may be considered when introducing a new UE capability parameter.

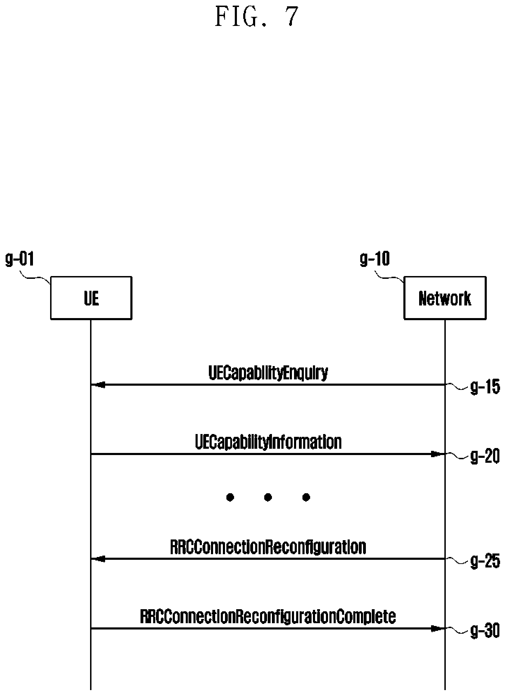

FIG. 7 is a diagram illustrating an example of signaling operations between a terminal and a base station when a new UE capability parameter that restricts logical channel mapping is introduced, according to an embodiment of the disclosure.

Referring to FIG. 7,
- In operation g-15, a base station g-10 may transmit, to a terminal g-05, UECapabilityEnquiry to identify UE capability information.
- In operation g-20, the terminal g-05 may report a newly defined UE capability parameter to the base station g-10 by including the same in a UECapabilityInformation message.
- In operation g-25, the base station may identify, based on the UECapabilityInformation message reported by the terminal, whether there is a restriction on the terminal for concurrently mapping a logical channel to carriers having asymmetric SCSs, and then, based on an identification result, configure logical channel configuration information. The base station may transfer, to the terminal, an RRCConnectionReconfiguration message including the logical channel configuration information.
- In operation g-30, after successfully applying the configuration indicated by the base station, the terminal may transmit an RRCConnectionReconfigurationComplete message in response, thereby completing radio bearer configuration in consideration of the logical channel mapping-related UE capability parameter reported by the terminal.

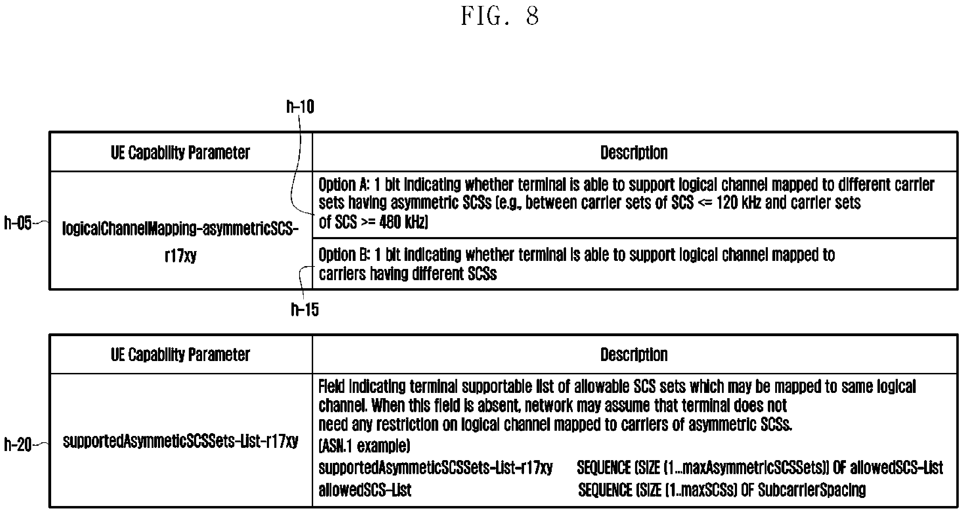

FIG. 8 shows diagrams illustrating examples of UE capability parameters defined to inform a base station that there is a restriction on a terminal with respect to concurrent mapping of a logical channel to carriers using asymmetric subcarrier spacings (SCSs), according to an embodiment of the disclosure.

Referring to FIG. 8, newly defined UE capability parameters may be mainly defined in two schemes h-05 or h-20.
- For a first scheme h-05, a UE capability parameter may be defined using a 1-bit indicator indicating whether a terminal supports concurrent mapping of a logical channel to all carriers with no restriction, or indicating whether the terminal cannot support concurrent mapping of a logical channel to all carriers with no restriction, and a combination of subcarrier spacings (SCSs) to which a logical channel can be mapped is defined in advance in the specification, so that a restriction is required to enable only carriers corresponding to the SCS combination to be mapped together. In this case, it is possible to define the UE capability parameter via two detailed schemes h-10 or h-15 according to a scheme of dividing the combination of SCSs which can be concurrently mapped to a logical channel.
   ▪ An option type A scheme h-10 is a case where SCSs are divided into two combinations of 120 kHz or lower (15 kHz, 30kHz, 60kHz, and 120kHz) and 480 kHz or more (480 kHz and 960 kHz). The option type A scheme is a scheme of combining SCS values supported in previously defined frequency range 1 (FR1: 410 MHz - 7.125 GHz) and frequency range 2-1 (FR 2-1: 24.25 - 52.6 GHz) with newly introduced subcarrier spacing (SCS) values in newly introduced frequency range 2-2 (FR 2-2: 52.6 - 71 GHz), thereby generating two combinations.
   ▪ An option type B scheme h-15 is a scheme of separating all SCS values to restrict a logical channel to be mapped to only carriers using a specific SCS value.

In the first scheme h-05, a scheme of configuring a combination of SCSs that can be mapped together to a logical channel may be defined in various ways in addition to the two detailed schemes h-10 and h-15 proposed above.
- The second scheme h-20 is a scheme of defining so that the terminal may inform the base station of all supportable subcarrier spacing (SCS) combinations which can be mapped together to a logical channel. In this case, a newly defined UE capability parameter may be defined to indicate an SCS combination, which can be mapped together to a logical channel, in the form of a list. Unlike the first scheme, in the second scheme, without using a fixed SCS combination, the terminal may configure and report a variably supportable SCS combination, so that greater freedom is provided compared to the first scheme when reporting a restriction on logical channel mapping. On the other hand, a signaling load may be increased compared to the first scheme defined using a 1-bit indicator.

As described above, the UE capability parameter for informing the base station that the terminal has a restriction on mapping a logical channel to carriers using asymmetric SCSs may be defined in various types. When the restriction reported by the corresponding parameter is to be applied to all band combinations reported by the terminal and feature set combinations applied thereto, the parameter may be defined as a general parameter defined in 3GPP specification TS 38.306. On the other hand, when the restriction is to be reported separately for each of a specific band combination and a feature set combination applied thereto, the parameter may also be defined a BandCombinationList parameter or a FeatureSetDownlink parameter. In addition to the parameter types described above, the parameters defined in the disclosure may be defined to be various types depending on a required restriction configuration range.

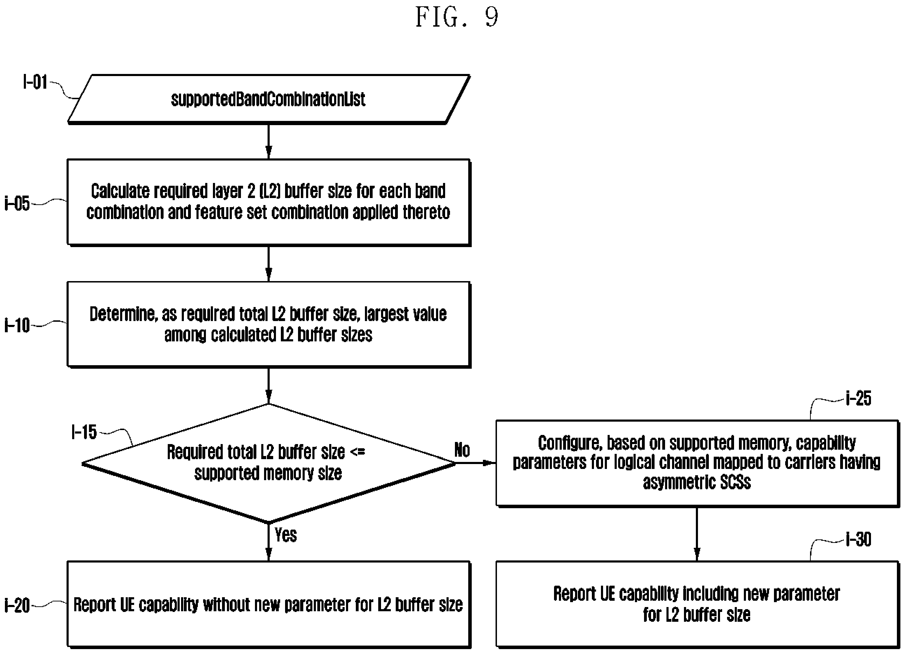

FIG. 9 is a flowchart illustrating a terminal operation method for configuring and reporting a new UE capability parameter value that restricts logical channel mapping, according to an embodiment of the disclosure.

Referring to FIG. 9,
- In operation i-01, a terminal may start operation by receiving, as an input factor, supportedBandCombinationList i-01 generated as a result of operation d-30 in FIG. 4.
- In operation i-05, the terminal may calculate a required layer 2 (L2) buffer size for each band combination and feature set combination applied thereto.
- In operation i-10, the terminal may determine, as a total L2 buffer size, a largest value among L2 buffer sizes calculated for each band combination.
- In operation i-15, the terminal may compare a supported memory size with the total L2 buffer size determined in operation i-10.
- When a comparison result in operation i-15 is "Yes", if, for example, the required total layer (L2) buffer size is smaller than or equal to the supported memory size, the terminal may report, in operation i-20, UE capability information to the base station without including the logical channel mapping-related UE capability parameter defined in FIG. 8.
- On the other hand, when the comparison result in operation i-15 is "No", if, for example, the required total L2 buffer size is larger than the supported memory size, the terminal in operation i-25 may configure, based on the supported memory size, a logical channel mapping-related UE capability parameter value defined as in FIG. 8. For example, when a required L2 buffer size for a specific band combination and a feature set combination applied thereto is calculated according to the scheme described above in FIG. 5, if a calculated required L2 buffer size value exceeds a memory size supportable by the terminal, the terminal may reduce the required L2 buffer size by not supporting mapping of asymmetric SCSs to the same logical channel with respect to the band combination and the feature set combination applied thereto. For example, if the new UE capability parameter is defined according to the scheme h-10 in FIG. 8, when the L2 buffer size required in a band combination which concurrently includes a carrier using an SCS of 120 kHz or lower and a carrier having an SCS of 480 kHz exceeds the memory size supportable by the terminal, the terminal may configure the capability parameter to be "Not supported" for the corresponding band combination (Bandcombination). In this way, by imposing the restriction on concurrent mapping of the logical channel to the carrier using the SCS of 120 kHz or lower and the carrier using the SCS of 480 kHz or higher, the terminal may reduce the L2 buffer size calculated as shown in reference numeral f-50 in FIG. 6.

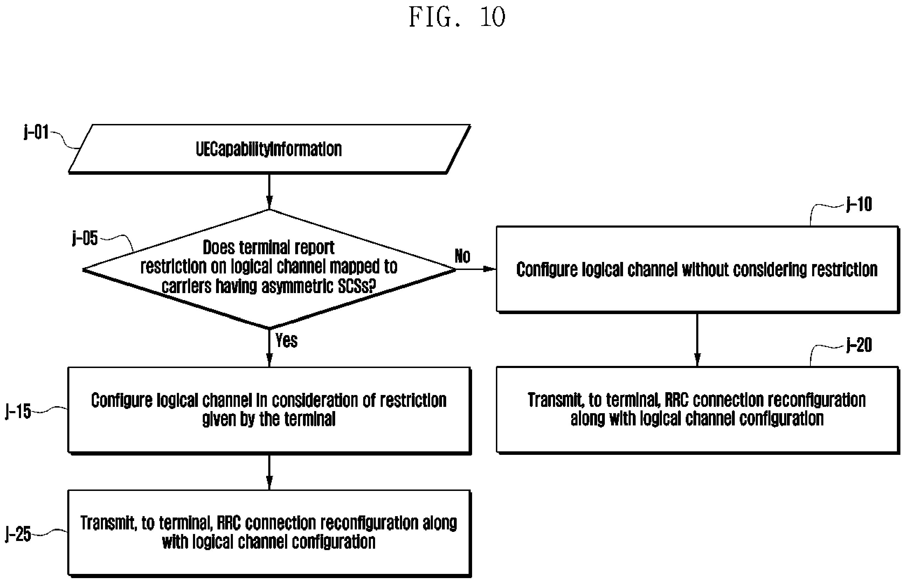

FIG. 10 is a flowchart illustrating an operation method of, when a base station receives a new UE capability parameter that restricts logical channel mapping, configuring, based thereon, a logical channel for a terminal according to an embodiment of the disclosure.

Specifically, referring to FIG. 10,
- In operation j-01, a base station may receive a UECapabilityInformation message from a UE.
- Then, in operation j-05, the base station may identify whether there is a restriction reported by the terminal regarding concurrent mapping of a logical channel to carriers using asymmetric SCSs. In this case, the restriction may be reported from the terminal via a newly defined UE capability parameter, as shown in FIG. 8.
- When the base station identifies UECapabilityInformation in operation j-05, if there is no restriction reported from the terminal regarding logical channel mapping, the base station may configure the logical channel without any restriction in operation j-15 according to an existing scheme. Then, in operation j-25, the base station may transmit logical channel configuration information determined in operation j-15 to the terminal by including the same in an RRCConnectionReconfiguration message.
- On the other hand, when the base station identifies UECapabilityInformation in operation j-05, if there is a restriction reported from the terminal regarding logical channel mapping, the base station may configure the logical channel in operation j-10 in consideration of the restriction. In this case, for each logical channel, the base station may include, in configuration information, information for mapping of a corresponding channel to carriers using a specific SCS value, and transfer the configuration information to the terminal. In this case, for a downlink data transmission configuration, the base station may independently configure a mapping relationship between the logical channel and a subordinate carrier, and may not separately transfer associated information to the terminal. On the other hand, for uplink data, since the terminal performs uplink data transmission of the logical channel, signaling is required to inform the terminal of a carrier to which the logical channel needs to be mapped. For the signaling, the base station may use an allowedSCS-List parameter or allowedSCS-List included in LogicalChannelConfig IE defined in 3GPP specification TS 38.331. Table 4 below shows descriptions of the allowedSCS-List parameter and allowedSCS-List, and the ASN.1 code of LogicalChannelConfig IE defined in TS38.331.

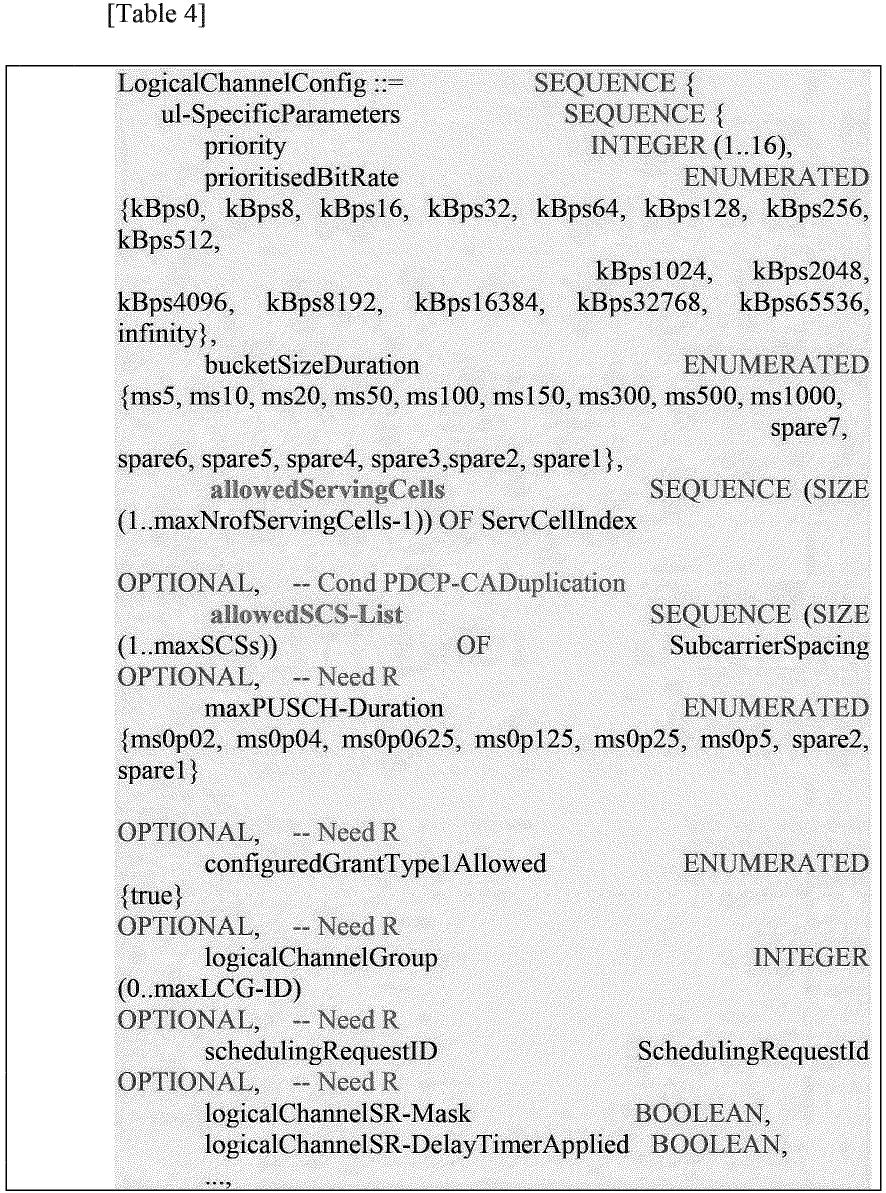

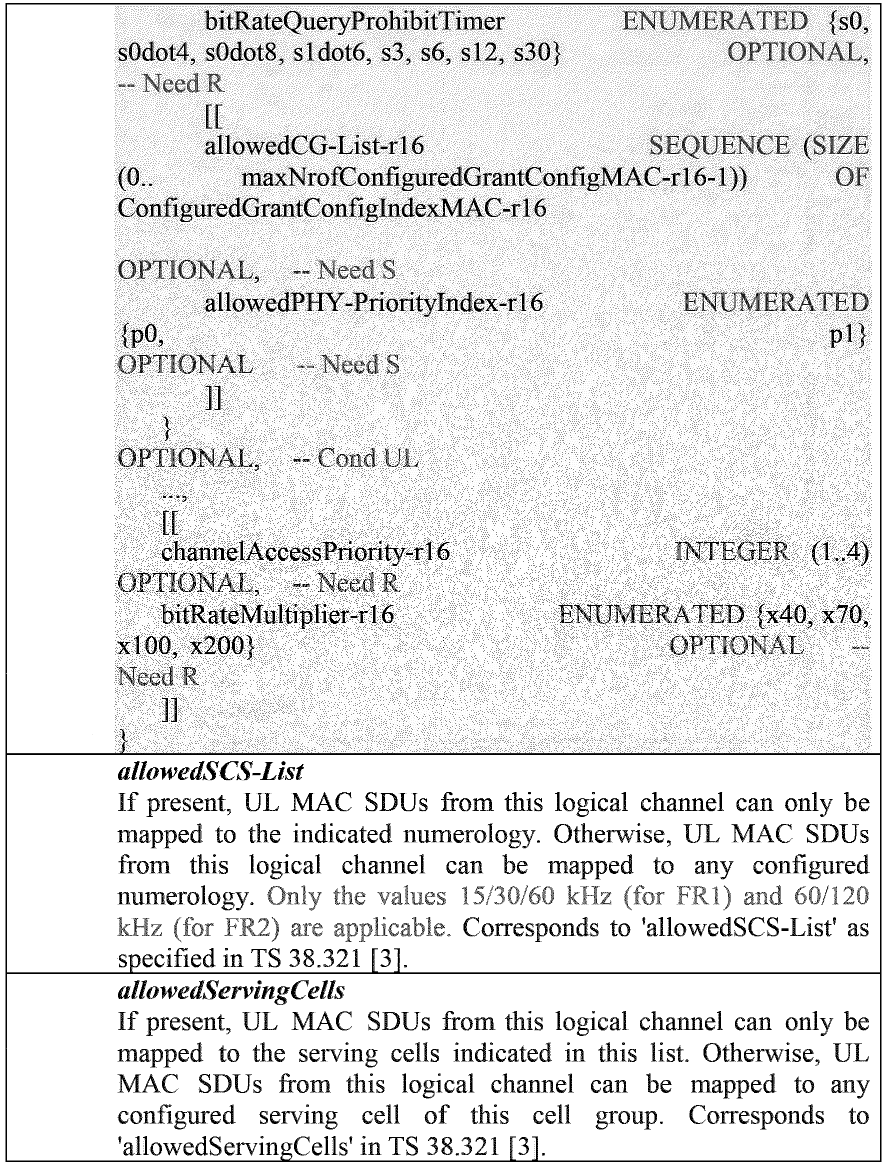

Referring to Table 4, via the allowedSCS-List parameter included in LogicalChannelConfig IE, the base station may map uplink data of a specific logical channel to only carriers having SCS values indicated in the list. However, in general, the range of SCS values that may be included in the allowedSCS-List according to the specification does not include 480 kHz and 960 kHz values supported in frequency range 2-2 (FR2-2: 52.6 - 71 GHz), and therefore a specification change may be required to include the values. In addition, when necessary, the base station may map the uplink data of the specific logical channel also to a specific serving cell via an allowedServingCells parameter. However, in the ASN.1 code of the allowedServingCells parameter, it may be seen that a tag referred to as "-Cond PDCP-CADuplication" is attached, wherein the tag indicates that the allowedServingCells parameter may be configured together only if there is a configuration for PDCP-CA Duplication. This is because the allowedServingCells parameter is first defined for the purpose of, when two packets copied from a PDCP end are transmitted respectively via two different RLC entities during PDCP-CA Duplication operation, configuring the respective RLC entities to be mapped to different serving cells (different carriers). However, as shown in FIG. 8, when a new UE capability parameter for restricting logical channel mapping is introduced, and the base station is to indicate, based on the introduction, the terminal to map logical channel data only to specific serving cells, modification of a configuration condition of the allowedServingCells parameter may be required.

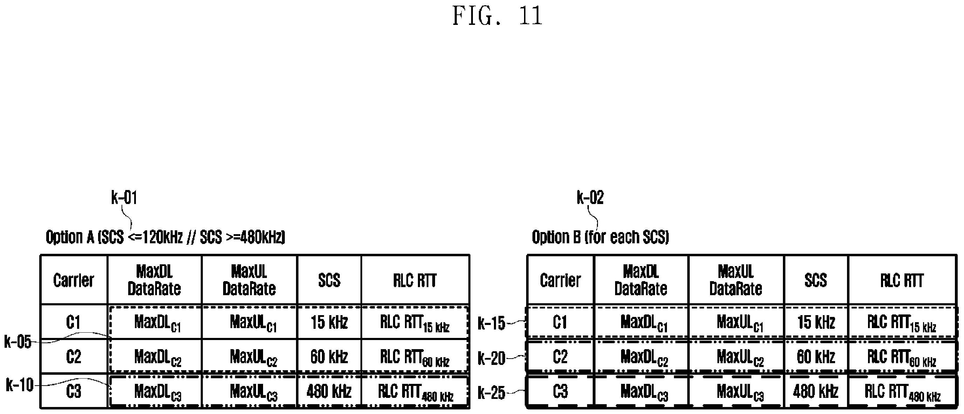

FIG. 11 shows diagrams illustrating examples of calculating a total layer 2 (L2) buffer size when a new UE capability parameter that restricts logical channel mapping is given, according to an embodiment of the disclosure.

Referring to FIG. 11,
- Table k-01 shows a total layer 2 buffer size calculation scheme when a UE capability parameter is defined according to the option A scheme h-10 in FIG. 8. When the option A scheme is selected, SCS combinations which can be mapped together to the same logical channel are divided into two combinations of 120 kHz or lower and 480 kHz or higher. Therefore, required L2 buffer sizes for the combinations may be calculated respectively. A total layer 2 buffer size to prevent a buffer overflow at an L2 level may be calculated by calculating each of an L2 buffer size required for a carrier combination k-05 having an SCS of 120 kHz or lower and an L2 buffer size required for a carrier combination k-10 having an SCS of 480 kHz or higher, and then adding the two values. As a variation to this, more simply, a maximum value among the L2 buffer sizes calculated for the respective two combinations may be used as the total layer 2 buffer size. However, when the maximum value is used as the total layer 2 buffer size, a buffer overflow may occur at the L2 level.
- Table k-02 shows a total layer 2 buffer size calculation scheme when a UE capability parameter is defined according to the option B scheme h-15 in FIG. 8. When the option B scheme is selected, each logical channel may be mapped only to carriers having the same SCS. Therefore, for each SCS, an L2 buffer size required for a corresponding carrier combination may be calculated. As in an example of k-03, the total layer 2 buffer size to prevent a buffer overflow at the L2 level may be calculated by calculating L2 buffer sizes required for a carrier combination k-15 using an SCS of 15 kHz, a carrier combination k-20 using an SCS of 60 kHz, and a carrier combination k-25 using an SCS of 480 kHz, respectively, and then adding all the values. As a variation to this, more simply, a maximum value among the L2 buffer sizes calculated for all the respective combinations may be used as the total layer 2 buffer size. However, when the maximum value is used as the total layer 2 buffer size, a buffer overflow may occur at the L2 level.

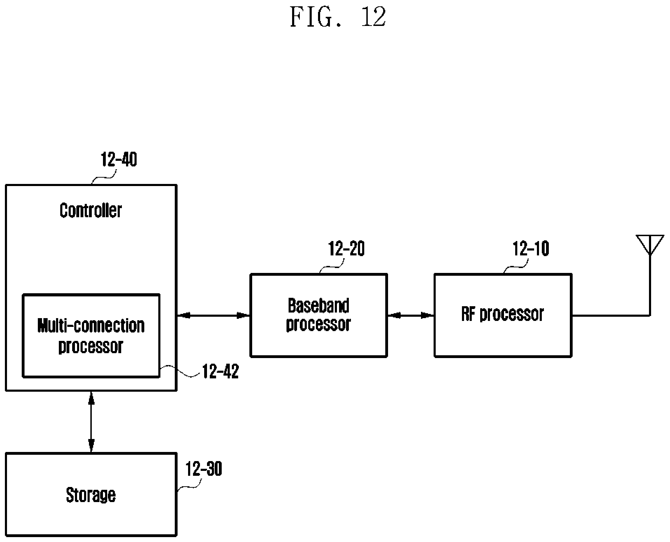

FIG. 12 is a diagram illustrating a terminal device according to an embodiment of the disclosure.

Referring to FIG. 12, a terminal may include a radio frequency (RF) processor 12-10, a baseband processor 12-20, a storage unit 12-30, and a controller 12-40. The elements of the terminal are not limited to the exemplary elements illustrated in FIG. 12, and may include fewer or more elements than the elements illustrated in FIG. 12.

The RF processor 12-10 may perform a function for signal transmission and reception via a wireless channel, such as signal band transform and amplification. For example, the RF processor 12-10 may up-convert a baseband signal provided from the baseband processor 12-20 into an RF band signal, transmit the converted RF band signal via an antenna, and then down-convert the RF band signal received via the antenna into a baseband signal. For example, the RF processor 12-10 may include a transmission filter, a reception filter, an amplifier, a mixer, an oscillator, a digital-to-analog converter (DAC), an analog-to-digital converter (ADC), etc. but is not limited thereto. In FIG. 12, only one antenna is illustrated, but the terminal may have multiple antennas. In addition, the RF processor 12-10 may include multiple RF chains. Furthermore, the RF processor 12-10 may perform beamforming. For beamforming, the RF processor 12-10 may adjust a phase and a magnitude of each of signals transmitted and received via multiple antennas or antenna elements. In addition, the RF processor 12-10 may perform MIMO, and may receive multiple layers when performing an MIMO operation.

The baseband processor 12-20 may perform a function of conversion between a baseband signal and a bitstream according to a physical layer specification of the system. For example, during data transmission, the baseband processor 12-20 may generate complex symbols by encoding and modulating a transmission bitstream. In addition, during data reception, the baseband processor 12-20 may reconstruct a reception bitstream via demodulation and decoding of a baseband signal provided from the RF processor 12-10. For example, when conforming to an orthogonal frequency division multiplexing (OFDM) scheme, during data transmission, the baseband processor 12-20 may generate complex symbols by encoding and modulating a transmission bitstream, map the generated complex symbols to sub-carriers, and then configure OFDM symbols via an inverse fast Fourier transform (IFFT) operation and cyclic prefix (CP) insertion. In addition, during data reception, the baseband processor 12-20 may divide the baseband signal provided from the RF processor 12-10 in units of OFDM symbols, reconstruct the signals mapped to the sub-carriers via a fast Fourier transform (FFT) operation, and then reconstruct the reception bitstream via demodulation and decoding.

The baseband processor 12-20 and the RF processor 12-10 may transmit and receive signals as described above. Accordingly, the baseband processor 12-20 and the RF processor 12-10 may be referred to as a transmitter, a receiver, a transceiver, or a communication unit. Furthermore, at least one of the baseband processor 12-20 and the RF processor 12-10 may include multiple communication modules to support multiple different radio access technologies. In addition, at least one of the baseband processor 12-20 and the RF processor 12-10 may include different communication modules to process signals of different frequency bands. For example, the different radio access technologies may include a wireless LAN (e.g., IEEE 802.11), a cellular network (e.g., LTE), and the like. In addition, the different frequency bands may include a super-high frequency (SHF) (e.g., 2.NRHz, NRhz) band, and a millimeter wave (e.g., 60 GHz) band. The terminal may transmit signals to and receive signals from the base station by using the baseband processor 12-20 and the RF processor 12-10, and the signals may include control information and data.

The storage unit 12-30 may store data, such as a basic program, an application program, and configuration information for terminal operations. For example, the storage unit 12-30 may store data information, such as a basic program, an application program, and configuration information for terminal operations. In addition, the storage unit 12-30 may provide stored data in response to a request of the controller 12-40.

The storage unit 12-30 may include a storage medium, such as a ROM, a RAM, a hard disk, a CD-ROM, and a DVD, or a combination of storage media. In addition, the storage unit 12-30 may include multiple memories. According to an embodiment of the disclosure, the storage unit 12-30 may store a program for performing a handover method according to the disclosure.

The controller 12-40 may control overall operations of the terminal. For example, the controller 12-40 may transmit and receive signals via the baseband processor 12-20 and the RF processor 12-10.

In addition, the controller 12-40 may record and read data in the storage unit 12-30. To this end, the controller 12-40 may include at least one processor. For example, the controller 12-40 may include a communication processor (CP) configured to perform control for communication and an application processor (AP) configured to control a higher layer, such as an application program. In addition, according to an embodiment of the disclosure, the controller 12-40 may include a multi-connection processor 12-42 configured to process a process operating in a multi-connection mode. In addition, at least one element within the terminal may be implemented in a single chip.

The controller 12-40 may perform control to report a newly defined UE capability parameter to a base station, according to an embodiment of the disclosure. For example, the controller 12-40 may perform control to include the UE capability parameter in a UECapabilityInformation message and transmit the message to the base station. Additionally, the controller 12-40 may perform control to receive logical channel configuration information configured based on the UE capability parameter from the base station having received the UE capability parameter. In addition, after successfully applying the configuration information received from the base station, the controller 12-40 may perform control to transmit a corresponding response message. According to transmission of the response message, configuration of a radio bearer in consideration of the UE capability parameter related to logical channel mapping, which is reported by the terminal, may be completed.

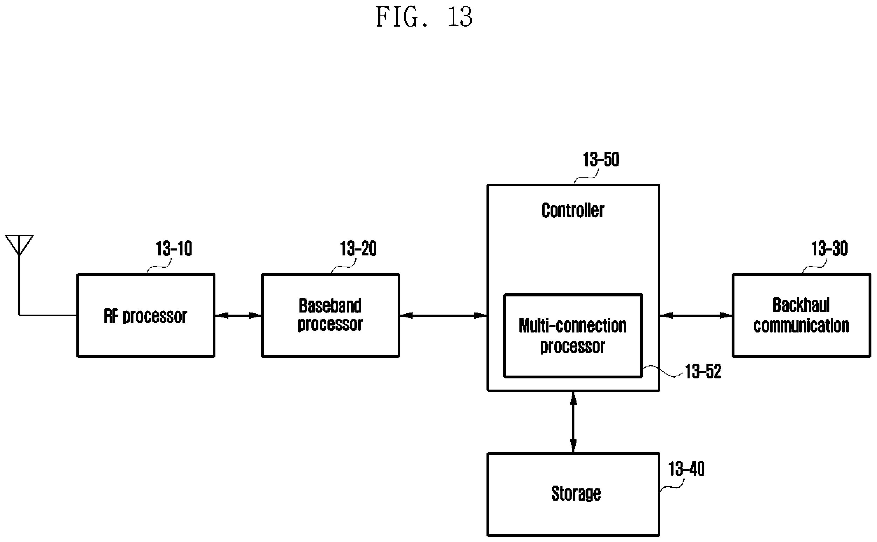

FIG. 13 is a diagram illustrating a base station device according to an embodiment of the disclosure.

The base station in FIG. 13 may be included in the network described above.

As illustrated in FIG. 13, the base station may include an RF processor 13-10, a baseband processor 13-20, a backhaul communication unit 13-30, a storage unit 13-40, and a controller 13-50. The elements of the base station are not limited to the exemplary elements illustrated in FIG. 13, and the base station may include fewer or more elements than the elements illustrated in FIG. 13. The RF processor 13-10 may perform a function for signal transmission and reception via a wireless channel, such as signal band transform and amplification. For example, the RF processor 13-10 may up-convert a baseband signal provided from the baseband processor 13-20 into an RF band signal, transmit the converted RF band signal via an antenna, and then down-convert the RF band signal received via the antenna into a baseband signal. For example, the RF processor 13-10 may include a transmission filter, a reception filter, an amplifier, a mixer, an oscillator, a DAC, an ADC, and the like. In FIG. 13, only one antenna is illustrated, but the RF processor 13-10 may have multiple antennas. In addition, the RF processor 13-10 may include multiple RF chains. Furthermore, the RF processor 13-10 may perform beamforming. For beamforming, the RF processor 13-10 may adjust a phase and a magnitude of each of signals transmitted and received via multiple antennas or antenna elements. The RF processor 13-10 may perform a downlink MIMO operation by transmitting one or more layers.

The baseband processor 13-20 may perform a function of conversion between a baseband signal and a bitstream according to a physical layer specification. For example, during data transmission, the baseband processor 13-20 may generate complex symbols by encoding and modulating a transmission bitstream. In addition, during data reception, the baseband processor 13-20 may reconstruct a reception bitstream via demodulation and decoding of a baseband signal provided from the RF processor 13-10. For example, when conforming to an OFDM scheme, during data transmission, the baseband processor 13-20 may generate complex symbols by encoding and modulating a transmission bitstream, map the generated complex symbols to sub-carriers, and then configure OFDM symbols via an IFFT operation and CP insertion. In addition, during data reception, the baseband processor 13-20 may divide the baseband signal provided from the RF processor 13-10 in units of OFDM symbols, reconstruct the signals mapped to the sub-carriers via an FFT operation, and then reconstruct the reception bitstream via demodulation and decoding. The baseband processor 13-20 and the RF processor 13-10 may transmit and receive signals as described above. Accordingly, the baseband processor 13-20 and the RF processor 13-10 may be referred to as a transmitter, a receiver, a transceiver, a communication unit, or a wireless communication unit. The base station may transmit signals to and receive signals from the terminal by using the baseband processor 13-20 and the RF processor 13-10, and the signals may include control information and data.

The backhaul communication unit 13-30 may provide an interface to perform communication with other nodes within a network. For example, the backhaul communication unit 13-30 may convert, into a physical signal, a bitstream transmitted from a main base station to another node, for example, an auxiliary base station, a core network, etc. and may convert a physical signal received from the another node into a bitstream.

The storage unit 13-40 may store data, such as a basic program, an application program, and configuration information for operations of the main base station. For example, the storage unit 13-40 may store information on a bearer assigned to a connected terminal, a measurement result reported from the connected terminal, and the like. Additionally, the storage unit 13-40 may store information serving as a criterion for determining whether to provide the terminal with multi-connectivity or to suspend multi-connectivity. In addition, the storage unit 13-40 may provide stored data in response to a request of the controller 13-50. The storage unit 13-40 may include a storage medium, such as a ROM, a RAM, a hard disk, a CD-ROM, and a DVD, or a combination of storage media. In addition, the storage unit 13-40 may include multiple memories. According to an embodiment of the disclosure, the storage unit 13-40 may store a program for performing handover according to the disclosure.

The controller 13-50 may control overall operations of the main base station. For example, the controller 13-50 may transmit and receive signals via the baseband processor 13-20 and the RF processor 13-10 or via the backhaul communication unit 13-30. In addition, the controller 13-50 may record and read data in the storage unit 13-40. To this end, the controller 13-50 may include at least one processor. In addition, according to an embodiment of the disclosure, the controller 13-50 may include a multi-connection processor 13-52 configured to process a process operating in a multi-connection mode.

According to an embodiment of the disclosure, in order to identify capability information of a terminal, the controller 13-50 may perform control to transmit UECapabilityEnquiry to the terminal. In addition, when a newly defined UE capability parameter is received from the terminal, the controller may identify 13-50, based on a UECapabilityInformation message reported by the terminal, whether there is a restriction on the terminal regarding concurrent mapping of a logical channel to carriers having asymmetric SCSs. Additionally, the controller 13-50 may configure logical channel configuration information, based on an identification result. In addition, the controller 13-50 may perform control to transmit a message including the logical channel configuration information to the terminal.

The methods according to various embodiments described in the claims or the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

The programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Furthermore, a plurality of such memories may be included in the electronic device.

In addition, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Further, a separate storage device on the communication network may access a portable electronic device.

In the disclosure, the term "computer program product" or "computer readable medium" is used to generally refer to a medium such as a memory, a hard disk installed in a hard disk drive, or a signal. The "computer program product" or "computer readable medium" is a constituent element that is provided to a method for reporting UE capability in a wireless communication system according to the disclosure.

The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium. For example, the non-transitory storage medium may include a buffer in which data is temporarily stored.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Furthermore, the above respective embodiments may be employed in combination, as necessary. For example, a part of one embodiment of the disclosure may be partially combined with a part of any other embodiment of the disclosure to operate a base station and a terminal. Moreover, embodiments of the disclosure may be applied to other communication systems, and other variants based on the technical idea of the embodiments may be implemented. For example, the embodiments may be applied to LTE, 5G, NR, or 6G systems. Therefore, the scope of the disclosure should not be defined as being limited to the embodiments, but should be defined by the appended claims and equivalents thereof.

## Claims

1. A terminal method in a wireless communication system, the method comprising:
receiving, from a base station, a UE capability request message for requesting capability information of a terminal; and
transmitting, to the base station, a UE capability information message comprising information on whether the terminal supports mapping of at least one carrier having different subcarrier spacings to a logical channel.

2. The method of claim 1, further comprising:
identifying a wireless capability of the terminal for at least one band combination (BC) and at least one feature set combination corresponding to the at least one BC;
based on the wireless capability of the terminal, identifying a calculated layer 2 buffer size of the terminal; and
based on the wireless capability of the terminal and the layer 2 buffer size of the terminal, identifying whether a preconfigured condition is satisfied,
wherein the UE capability information message comprising the information is transmitted in case that the preconfigured condition is identified to be satisfied.

3. The method of claim 1, wherein, in case that a calculated layer 2 buffer size of the terminal exceeds a memory size supported by the terminal, the information indicates that the terminal does not support mapping of the at least one carrier having different subcarrier spacings to the logical channel.

4. The method of claim 1, wherein the information:
comprises an indicator indicating whether mapping at least one carrier, which has a subcarrier spacing belonging to an range, to the logical channel is supported;
comprises an indicator indicating whether mapping at least one carrier, which has the same subcarrier spacing, to the logical channel is supported; or
comprises a list comprising at least one subcarrier spacing mappable to the logical channel.

5. A base station method in a wireless communication system, the method comprising:
transmitting, to a terminal, a UE capability request message for requesting capability information of the terminal;
receiving a UE capability information message comprising information on whether the terminal supports mapping of at least one carrier having different subcarrier spacings to logical channel; and
configuring a logical channel for the terminal, based on the received UE capability information message.

6. The method of claim 5, wherein, based on a wireless capability of the terminal for at least one band combination (BC) and at least one feature set combination corresponding to the at least one BC, and a layer 2 buffer size of the terminal calculated based on the wireless capability of the terminal, the information indicates that the terminal does not support mapping of the at least one carrier having different subcarrier spacings to the logical channel.

7. The method of claim 5, wherein the configuring of the logical channel comprises, in case that the information indicates that the terminal does not support mapping of the at least one carrier having different subcarrier spacings to the logical channel, configuring the logical channel for the terminal, based on the information.

8. A terminal in a wireless communication system, the terminal comprising:
a transceiver; and
a controller configured to receive, from a base station via the transceiver, a UE capability request message for requesting capability information of a terminal, and
transmit, to the base station via the transceiver, a UE capability information message comprising information on whether the terminal supports mapping of at least one carrier having different subcarrier spacings to a logical channel.

9. The terminal of claim 8, wherein the controller is configured to:
identify a wireless capability of the terminal for at least one band combination (BC) and at least one feature set combination corresponding to the at least one BC;
based on the wireless capability of the terminal, identify a calculated layer 2 buffer size of the terminal; and
based on the wireless capability of the terminal and the layer 2 buffer size of the terminal, identify whether a preconfigured condition is satisfied, and
wherein the UE capability information message comprising the information is transmitted in case that the preconfigured condition is identified to be satisfied.

10. The terminal of claim 8, wherein, in case that a calculated layer 2 buffer size of the terminal exceeds a memory size supported by the terminal, the information indicates that the terminal does not support mapping of the at least one carrier having different subcarrier spacings to the logical channel.

11. The terminal of claim 8, wherein the information:
comprises an indicator indicating whether mapping at least one carrier, which has a subcarrier spacing belonging to an range, to the logical channel is supported;
comprises an indicator indicating whether mapping at least one carrier, which has the same subcarrier spacing, to the logical channel is supported; or
comprises a list comprising at least one subcarrier spacing mappable to the logical channel.

12. A base station in a wireless communication system, the base station comprising:
a transceiver; and
a controller configured to perform control to transmit, to a terminal via the transceiver, a UE capability request message for requesting capability information of the terminal,
receive, via the transceiver, a UE capability information message comprising information on whether the terminal supports mapping of at least one carrier having different subcarrier spacings to logical channel, and
configure a logical channel for the terminal, based on the received UE capability information message.

13. The base station of claim 12, wherein, based on a wireless capability of the terminal for at least one band combination (BC) and at least one feature set combination corresponding to the at least one BC, and a layer 2 buffer size of the terminal calculated based on the wireless capability of the terminal, the information indicates that the terminal does not support mapping of the at least one carrier having different subcarrier spacings to the logical channel.

14. The base station of claim 12, wherein, in case that the information indicates that the terminal does not support mapping of the at least one carrier having different subcarrier spacings to the logical channel, the logical channel for the terminal is configured based on the information.
